# DEMANDE DE BREVET EUROPEEN

(11) **EP 4 685 099 A1**
(43) Date de publication de la demande: **28.01.2026**
(21) Numéro de dépôt: 25190303.5
(22) Date de dépôt: 17.07.2025
(51) Int. Cl.: B66F 9/065, B66F 9/075

(54) **MACHINE DE MANUTENTION**

(30) Priorité: 23.07.2024 FR 2408107
(71) Demandeur: MANITOU BF, 44150 Ancenis (FR)
(72) Inventeur: BESSEAU, Maurice, 44150 ANCENIS (FR); POUSSET, Alexis, 44150 ANCENIS (FR)
(74) Mandataire: Loyer & Abello

(57) **Abrégé**

L'invention concerne une machine de manutention (1) comportant :
- un châssis (2) ;
- un bras de levage (20) ;
- un essieu avant (3) et un essieu arrière (4) ;
- une cabine (6) qui est positionnée entre l'essieu avant (3) et l'essieu arrière (4) et d'un premier côté du bras de levage (20) ;
- au moins un moteur électrique ;
- une première et une deuxième unités de stockage d'énergie électrique qui sont connectés à l'au moins un moteur électrique et fixés au châssis (2) de part et d'autre du bras de levage (20), la première unité de stockage d'énergie électrique (40A) étant positionné derrière la cabine (6) du premier côté du bras de levage (20) et la deuxième unité de stockage d'énergie électrique (40B) étant disposés d'un deuxième côté du bras de levage (20), opposé au premier côté, au moins partiellement en regard de la première unité de stockage de l'énergie électrique selon une direction transversale orthogonale au plan longitudinal médian.

## Description

### Domaine technique

L'invention se rapporte à une machine de manutention comprenant un moteur électrique et au moins une unité de stockage d'énergie électrique.

### Arrière-plan technologique

On connait du document CN104500113 une machine de manutention comprenant un châssis, un bras de levage qui est monté pivotant sur le châssis, un essieu avant et un essieu arrière qui sont fixés au châssis, et une cabine qui est fixée au châssis et est positionnée entre l'essieu avant et l'essieu arrière.

La machine de manutention comporte également un moteur électrique qui est accouplé à l'un des essieux, un support de batterie qui disposé derrière le châssis de la machine, ainsi qu'une batterie qui est enfichée sur le support de batterie.

Une telle disposition de la batterie nuit à la compacité de la machine de manutention notamment dans le cas de machines de manutention de petit gabarit.

### Résumé de l'invention

Une idée à la base de l'invention est de diminuer l'impact des batteries sur la compacité de la machine de manutention, sans pour autant dégrader l'équilibrage latéral de la machine.

Une autre idée à la base de l'invention est de choisir un emplacement facilement accessible pour les batteries tout en limitant le risque de chocs sur celles-ci.

Selon un mode de réalisation, l'invention fournit une machine de manutention comportant :
- un châssis ;
- un bras de levage qui est monté pivotant sur le châssis dans un plan longitudinal médian ;
- un essieu avant et un essieu arrière qui sont fixés au châssis ;
- une cabine destinée à accueillir un conducteur qui est fixée au châssis et est positionnée entre l'essieu avant et l'essieu arrière et d'un premier côté du bras de levage ;
- au moins un moteur électrique ; et
- une première et une deuxième unités de stockage d'énergie électrique qui sont connectées à l'au moins un moteur électrique et fixés au châssis de part et d'autre du bras de levage, la première unité de stockage d'énergie électrique étant positionnée derrière la cabine du premier côté du bras de levage et la deuxième unité de stockage d'énergie électrique étant disposée d'un deuxième côté du bras de levage, opposé au premier côté, au moins partiellement en regard de la première unité de stockage de l'énergie électrique selon une direction transversale orthogonale au plan longitudinal médian.

Grâce à ces caractéristiques, l'emplacement des première et deuxième unités de stockage d'énergie électrique permet d'une part de diminuer l'impact des batteries sur la compacité de la machine de manutention, et d'autre part de conserver l'équilibrage latéral de la machine. De plus, leur position à l'arrière du véhicule sans faire saillie, permet de rendre les batteries accessibles tout en les protégeant de nombreux chocs lors de l'utilisation de la machine.

Selon des modes de réalisation, une telle machine peut comporter une ou plusieurs des caractéristiques suivantes.

Selon un mode de réalisation, l'au moins un moteur électrique est accouplé à au moins un des essieux avant et arrière.

Selon un mode de réalisation, les première et deuxième unités de stockage d'énergie électrique présentent une distribution de masse sensiblement équilibrée par rapport au plan longitudinal médian.

Selon un mode de réalisation, la distribution de masse est de 50 à 60% du côté de la première unité de stockage d'énergie électrique et de 40 à 50 % du côté de la deuxième unité de stockage d'énergie électrique.

Selon un mode de réalisation, la distribution de masse est de 60% du côté de la première unité de stockage d'énergie électrique et 40% du côté de la deuxième unité de stockage d'énergie électrique.

Selon un mode de réalisation, la distribution de masse est de 50% côté première unité de stockage d'énergie électrique et 50% côté deuxième unité de stockage d'énergie électrique.

Selon un mode de réalisation, la distribution de masse est de 40% côté première unité de stockage d'énergie électrique et 60% côté deuxième unité de stockage d'énergie électrique.

Grâce à une telle distribution, les éléments de batterie ont un effet relativement neutre, voire un effet favorable sur l'équilibrage latéral de la machine. Par ailleurs, un équilibrage latéral globalement acceptable de la machine peut être obtenu par un agencement équilibré des autres composants de la machine. Cet agencement équilibré peut en outre être réalisé de différentes manières.

Selon un mode de réalisation, les première et deuxième unités de stockage d'énergie électrique comportent chacune plusieurs cellules électrolytiques, la première unité de stockage d'énergie électrique ou la deuxième unité de stockage d'énergie électrique comportant un système de gestion de batterie configuré pour surveiller et gérer les cellules électrolytiques des première et deuxième unités de stockage d'énergie électrique.

Selon un mode de réalisation, le système de gestion de batterie est compris dans la première unité de stockage d'énergie électrique, le nombre de cellules électrolytiques de la deuxième unité de stockage d'énergie électrique étant supérieur au nombre de cellules électrolytiques de la première unité de stockage d'énergie électrique.

Selon un mode de réalisation, le système de gestion de batterie est compris dans la deuxième unité de stockage d'énergie électrique, le nombre de cellules électrolytiques de la première unité de stockage d'énergie électrique étant supérieur au nombre de cellules électrolytiques de la deuxième unité de stockage d'énergie électrique.

Selon un mode de réalisation, la première unité de stockage d'énergie électrique comporte plusieurs cellules électrolytiques, et la deuxième unité de stockage d'énergie électrique comporte un système de gestion de batterie configuré pour surveiller et gérer les cellules électrolytiques de la première unité de stockage d'énergie électrique.

Selon un mode de réalisation, la deuxième unité de stockage d'énergie électrique comporte plusieurs cellules électrolytiques, et la première unité de stockage d'énergie électrique comporte un système de gestion de batterie configuré pour surveiller et gérer les cellules électrolytiques de la deuxième unité de stockage d'énergie électrique.

Selon un mode de réalisation, les première et deuxième unités de stockage d'énergie électrique comportent chacune au moins un capteur de température et au moins un dispositif de mesure de l'état de charge.

Selon un mode de réalisation, la première unité de stockage d'énergie électrique est située dans une direction longitudinale, parallèle au plan longitudinale médian, entre la cabine et une extrémité arrière du châssis.

Selon un mode de réalisation, la première unité de stockage d'énergie électrique est située dans la direction transversale entre le bras de levage et un bord latéral du châssis.

Selon un mode de réalisation, la machine de manutention comporte un caisson configuré pour recevoir une pluralité d'équipements, le caisson étant positionné entre l'essieu avant et l'essieu arrière et du deuxième côté du bras de levage,

Selon un mode de réalisation, la deuxième unité de stockage d'énergie électrique est située dans une direction longitudinale, parallèle au plan longitudinale médian, entre le caisson et une extrémité arrière du châssis.

Selon un mode de réalisation, la deuxième unité de stockage d'énergie électrique est située dans la direction transversale entre le bras de levage et un bord latéral du châssis.

Selon un mode de réalisation, le moteur électrique est un moteur électrique de propulsion configuré pour propulser la machine de manutention, et la machine de manutention comporte un moteur électrique d'actionnement configuré pour actionner le bras de levage, les première et deuxième unités de stockage d'énergie électrique étant connectés aux moteurs électriques d'actionnement et de propulsion.

Selon un mode de réalisation, la machine de manutention comporte un caisson configuré pour recevoir une pluralité d'équipements, le caisson étant positionné entre l'essieu avant et l'essieu arrière et du deuxième côté du bras de levage, le moteur électrique de propulsion étant situé entre l'essieu avant et l'essieu arrière sous le bras de levage, et le moteur électrique d'actionnement étant situé dans le caisson.

Selon un mode de réalisation, la machine de manutention comporte au moins une transmission accouplant ledit au moins un moteur électrique à au moins l'un de l'essieu avant et l'essieu arrière.

Pour sa propulsion, la machine peut comporter un essieu moteur ou deux essieux moteurs. L'essieu moteur peut être un essieu avant ou un essieu arrière.

Pour l'entraînement d'un essieu, la machine peut employer un ou plusieurs moteurs électriques couplés par une chaîne de transmission mécanique à l'essieu, autrement dit un entraînement électromécanique.

La chaîne de transmission mécanique peut comporter un ou plusieurs éléments choisis dans le groupe consistant en : un train d'engrenage réducteur, un arbre de transmission et un joint de cardan.

Alternativement, pour l'entraînement d'un essieu, la machine peut employer un ou plusieurs moteurs électriques couplés par une chaîne de transmission hydraulique à l'essieu, autrement dit un entraînement électrohydraulique.

La chaîne de transmission hydraulique peut comporter une pompe hydraulique entraînée par le moteur électrique et au moins un moteur hydraulique entraîné par un flux hydraulique généré par la pompe hydraulique. La chaîne de transmission hydraulique peut être une chaîne de transmission hydrostatique, à savoir en circuit fermé. La pompe hydraulique et le moteur électrique peuvent être communs avec d'autres fonctions hydrauliques de la machine, comme une fonction d'actionnement hydraulique du bras de levage ou autre.

Le cas échéant, pour l'entraînement de deux essieux, la machine peut employer deux entraînements indépendants ou un entraînement commun. Les deux entraînements indépendants peuvent de natures différentes, par exemple un entraînement électromécanique et un entraînement électrohydraulique, ou de natures identiques, par exemple deux entraînements électromécaniques.

Selon un mode de réalisation, les première et deuxième unités de stockage d'énergie électrique sont connectés au moteur électrique de propulsion via un premier variateur électrique de vitesse.

Selon un mode de réalisation, les première et deuxième unités de stockage d'énergie électrique sont connectés au moteur électrique d'actionnement via un deuxième variateur électrique de vitesse.

Pour l'actionnement du bras de levage, la machine peut comporter un ou plusieurs actionneurs électriques, à savoir un actionnement électrique par exemple par un vérin électrique, et/ou un ou plusieurs actionneurs hydrauliques alimentés par une ou plusieurs pompes entraînées par un ou plusieurs moteurs électriques, à savoir un actionnement électrohydraulique, par exemple par un vérin hydraulique.

Plusieurs actionneurs de natures différentes, par exemple au moins un actionneur électrique et au moins un actionneur hydraulique, ou de natures identiques, par exemple plusieurs actionneurs hydrauliques, peuvent être prévus pour actionner différents mouvements ou degrés de liberté du bras de levage.

Par exemple, les différents mouvements peuvent être choisis dans le groupe consistant en : un mouvement de pivotement, un mouvement d'extension-rétraction et un mouvement d'inclinaison d'un porte-outil.

Selon un mode de réalisation, le au moins un moteur électrique d'actionnement comporte au moins un vérin électrique configuré pour actionner au moins un mouvement du bras de levage.

Selon un mode de réalisation, la machine comprend en outre une pompe hydraulique couplée au moteur électrique d'actionnement et au moins un actionneur hydraulique alimenté par la pompe hydraulique pour actionner au moins un mouvement du bras de levage.

Dans le cas d'un actionnement électrohydraulique d'un ou plusieurs mouvements du bras de levage et d'un entraînement électrohydraulique d'un ou plusieurs essieux, des pompes hydrauliques indépendantes peuvent être employées ou une pompe hydraulique commune peut être employée. Les pompes hydrauliques indépendantes peuvent être entraînées par plusieurs moteurs électriques respectifs.

Dans tous les cas, les première et deuxième unités de stockage d'énergie électrique peuvent être connectés électriquement à un unique moteur électrique ou à plusieurs moteurs électriques pour fournir de la puissance au(x)dit(s) moteur(s) électrique(s) pour la propulsion du châssis et pour l'actionnement du bras de levage.

Selon un mode de réalisation, la machine de manutention est un engin télescopique ou un chariot élévateur télescopique, le bras de levage étant un bras de levage télescopique. Ce type de machine est communément appelé « Telehandler » en anglais.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
La figure 1 représente une vue de dessus d'une machine de manutention selon un mode de réalisation.
La figure 2 représente une vue en perspective partielle d'une machine de manutention selon un mode de réalisation.
La figure 3 représente une vue en perspective d'éléments internes d'une machine de manutention selon un mode de réalisation, à savoir les essieux, les longerons et les première et deuxième unités de stockage d'énergie électrique.
La figure 4 représente une vue en perspective d'éléments internes d'une machine de manutention selon un mode de réalisation, à savoir notamment les essieux, les moteurs électriques et les première et deuxième unités de stockage d'énergie électrique.

### Description des modes de réalisation

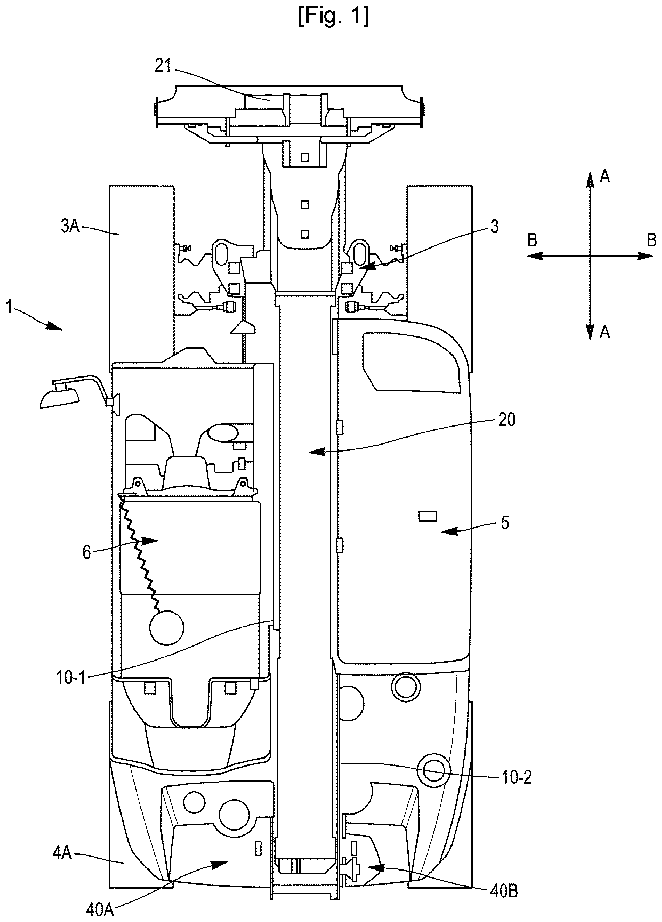

La figure 1 est une vue d'ensemble en perspective d'une machine de manutention 1, ci-après désigné par « la machine 1 » par commodité. La machine 1 est réalisé ici sous la forme d'un chariot élévateur télescopique.

Sur les figures, la flèche A-A désigne une direction longitudinale de la machine 1, la flèche B-B désigne une direction transversale de la machine 1, et la flèche C-C désigne une direction verticale de la machine 1. La direction longitudinale A-A est une direction avant-arrière de la machine 1. La direction transversale B-B est une direction gauche-droite de la machine 1 et est perpendiculaire à la direction longitudinale A-A. La direction verticale C-C est perpendiculaire à la direction longitudinale A-A et à la direction transversale B-B.

La machine 1 comprend un châssis 2 et un bras de levage 20.

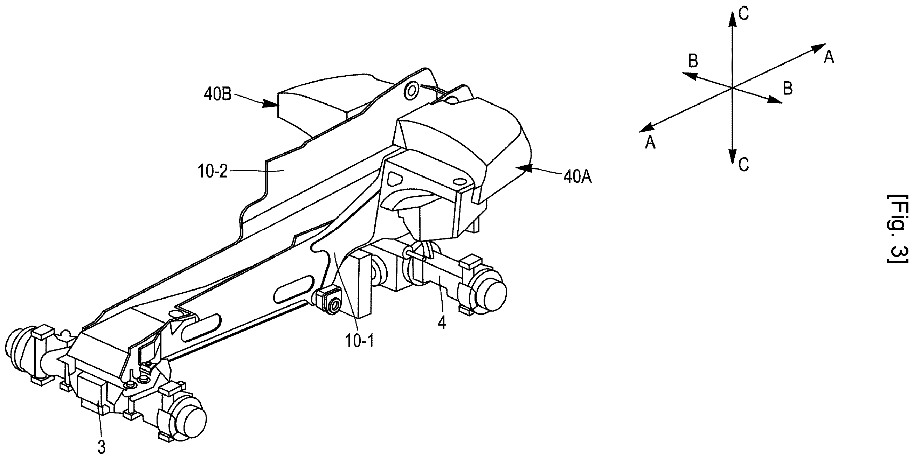

Le châssis 2 comporte deux longerons 10-1 et 10-2, qui sont mieux visibles en particulier sur la figure 3. Les longerons 10-1, 10-2 sont des pièces métalliques globalement plates, parallèles entre elles et s'étendant parallèlement à la direction longitudinale A-A, dans un plan parallèle à un plan longitudinal médian.

Le châssis 2 est mobile et déplaçable sur la surface du sol (non représentée sur les dessins), par le biais d'un essieu avant 3 portant deux roues 3A, l'une à gauche et l'autre à droite, et d'un essieu arrière 4 portant deux roues 4A, l'une à gauche et l'autre à droite. L'essieu avant 3 et l'essieu arrière 4 sont espacés suivant la direction longitudinale A-A.

Comme cela est mieux visible en particulier sur la figure 1, le bras de levage 20 s'étend, comme les longerons 10-1, 10-2, parallèlement à la direction longitudinale A-A. Le bras de levage 20 est articulé aux deux longerons 10-1, 10-2, entre les deux longerons 10-1, 10-2, de façon à être mobile à pivotement par rapport aux deux longerons 10-1, 10-2 autour d'un axe de pivotement. L'axe de pivotement s'étend suivant la direction transversale B-B.

Le bras de levage 20 peut être réalisé de différentes manières, notamment sous la forme de plusieurs sections télescopiques comme représenté, ou en variante sous la forme d'un bras de longueur fixe. Une extrémité du bras de levage 20 opposée à l'axe de pivotement peut porter un outil de travail ou, comme représenté sur la figure 1, un porte-outil modulaire 21 susceptible de recevoir des outils de travail de plusieurs types, selon la technique connue. Par outil de travail, on désigne par exemple une paire de fourches, un godet, un treuil, une pince, etc.

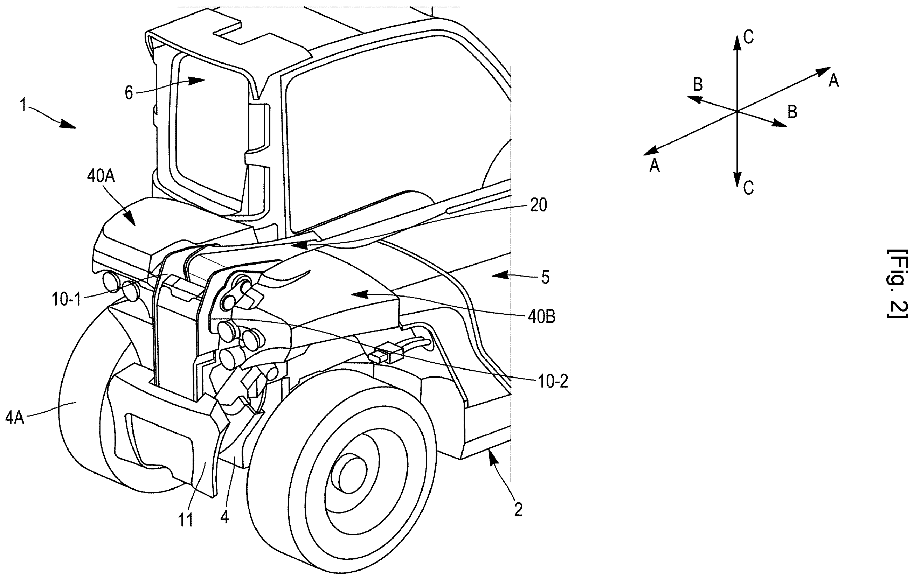

On voit en outre sur la figure 1 et sur la figure 2 que la machine 1 comprend, d'un premier côté du bras du levage 20, une cabine 6 dans laquelle un conducteur de la machine 1 peut prendre place, et, d'un deuxième côté du bras de levage 20, un caisson 5 pouvant recevoir divers équipements de la machine 1. La cabine 6 fait saillie du longeron 10-1 dans une direction opposée au longeron 10-2 et le caisson 5 fait saillie du longeron 10-2 dans une direction opposée au longeron 10-1. Plus concrètement, le caisson 5 est disposé le long du longeron 10-2, extérieurement à ce longeron 10-2 suivant la direction transversale B-B. Bien que les dessins et la description qui va suivre présentent la cabine 6 disposée en saillie du longeron 10-1 situé à gauche de la machine 1 et le caisson 5 disposé en saillie du longeron 10-2 situé à droite de la machine 1, il est bien entendu que l'agencement inverse est aussi possible, c'est-à-dire que l'agencement des longerons 10-1, 10-2 peut être inversé.

Comme représenté, la cabine 6 et le caisson 5 sont disposés entre l'essieu avant 3 et l'essieu arrière 4 suivant la direction longitudinale A-A.

Toujours en référence aux figures 1 et 2, la machine 1 comporte une première unité de stockage d'énergie électrique 40A et une deuxième unité de stockage d'énergie électrique 40B fixées au châssis 2 de part et d'autre du bras de levage 20 selon la direction transversale B-B. La première unité de stockage d'énergie électrique 40A est positionnée derrière la cabine 6 du premier côté du bras de levage 20 et la deuxième unité de stockage d'énergie électrique 40B est disposée du deuxième côté du bras de levage 20, en regard de la première unité de stockage de l'énergie électrique 40A selon la direction transversale B-B.

Les première et deuxième unités de stockage d'énergie électrique 40A-40B sont situées à l'aplomb de l'essieu arrière 4.

La première unité de stockage d'énergie électrique 40A est fixée au longeron 10-1, et la deuxième unité de stockage d'énergie électrique 40B est fixée au longeron 10-2, comme visible en figure 3.

Comme représenté en figure 2, la première unité de stockage d'énergie électrique 40A est située dans la direction longitudinale A-A entre la cabine 6 et une extrémité arrière 11 du châssis 2. La première unité de stockage d'énergie électrique 40A est également située dans la direction transversale B-B entre le bras de levage 20 et un bord latéral du châssis 2, ici le bord latéral gauche.

La deuxième unité de stockage d'énergie électrique 40B est quant à elle située dans la direction longitudinale A-A entre le caisson 5 et l'extrémité arrière 11 du châssis 2. La deuxième unité de stockage d'énergie électrique 40B est également située dans la direction transversale B-B entre le bras de levage 20 et un bord latéral du châssis 2, ici le bord latéral droit.

Habituellement dans ce type de machine de manutention 1, un contrepoids est placé à l'arrière de la machine 1. La position avantageuse des première et deuxième unités de stockage d'énergie électrique 40A-40B à l'arrière de la machine 1 permet de limiter la masse nécessaire d'un tel contrepoids, voir de retirer complètement un tel contrepoids.

Les première et deuxième unités de stockage d'énergie électrique 40A-40B sont destinées à alimenter en électricité au moins un moteur électrique de la machine 1 comme cela sera décrit ci-après.

Dans un exemple de réalisation, chaque unité de stockage d'énergie électrique 40A-40B comprend un boîtier renfermant plusieurs cellules électrolytiques générant la tension aux bornes de l'unité de stockage d'énergie électrique 40A-40B. L'unité de stockage d'énergie électrique 40A-40B est par exemple du type lithium-ion ou autre. La première unité de stockage d'énergie électrique 40A comporte ici un système de gestion de batterie (« Battery Management System » ou BMS en anglais) qui, de façon connue en soi, surveille et gère la charge et la décharge des cellules électrolytiques. Dans cet exemple, ce système de gestion de batterie surveille et gère la charge et la décharge des cellules électrolytiques des première et deuxième unités de stockage d'énergie électrique 40A-40B. Afin de conserver une distribution de masse sensiblement équilibrée entre les unités de stockage d'énergie électrique 40A-40B, le nombre de cellules électrolytiques de la deuxième unité de stockage d'énergie électrique 40B est supérieur au nombre de cellules électrolytiques de la première unité de stockage d'énergie électrique 40A.

Dans un autre exemple de réalisation, c'est la deuxième unité de stockage d'énergie électrique 40A qui comporte le système de gestion de batterie commun. Dans encore un autre exemple de réalisation, chaque unité de stockage d'énergie électrique 40A-40B comporte son propre système de gestion de batterie.

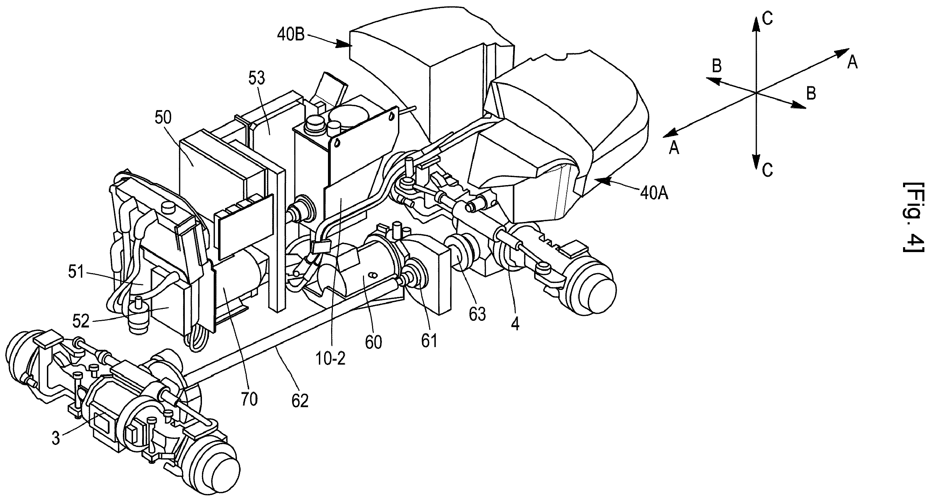

Sur les figures 3 et 4, les première et deuxième unités de stockage d'énergie électrique 40A-40B ont été représentées avec des formes différentes. Ces formes sont des exemples de réalisation, et d'autres formes pourraient être envisagées.

En référence à la figure 4, la machine 1 comporte un boîtier de distribution de puissance 50 qui est connecté aux unités de stockage d'énergie électrique 40A-40B et qui est configuré pour alimenter ou non les composants électriques de la machine 1. De tels boîtiers de distribution de puissance sont connus en tant que tels et ne sont pas décrits en détail ici.

Le boîtier de distribution de puissance 50 est notamment connecté à un variateur électrique de vitesse 51 lui-même connecté électriquement à un moteur électrique de propulsion 60 pour la propulsion de la machine 1, et à un variateur électrique de vitesse 52 lui-même connecté électriquement à un moteur électrique d'actionnement 70 pour l'actionnement du bras de levage 20. Les variateurs électriques de vitesse 51 et 52 sont ici du type onduleur triphasé, c'est-à-dire recevant en entrée une tension continue et fournissant en sortie une tension alternative triphasée. D'autres configurations électriques sont toutefois possibles.

Comme représenté en figure 4, le moteur électrique de propulsion 60 est situé dans la direction longitudinale A-A entre l'essieu avant 3 et l'essieu arrière 4, et dans la direction verticale C-C sous le bras de levage 20. Le moteur électrique d'actionnement 70 est quant à lui reçu dans le caisson 5.

De façon non représentée sur la figure 4, le boîtier de distribution de puissance 50 peut en outre être connecté électriquement à d'autres équipements électriques de la machine 1, notamment un module de chauffage de la cabine 6, et/ou un module de climatisation de la cabine 6, et/ou un ou plusieurs convertisseurs continu-continu (DC/DC) pour l'alimentation électrique d'autres équipements électriques de la machine, par exemple un feu de signalisation, un avertisseur sonore, etc.

Le boîtier de distribution de puissance 50 est dans l'exemple représenté en figure 4 reçu dans le caisson 5.

Comme mentionné ci-dessus, le moteur électrique de propulsion 60 assure la propulsion de la machine 1. Comme visible sur la figure 4, un arbre de sortie (non représenté) du moteur électrique de propulsion 60 entraîne deux arbres 62 et 63 via un réducteur 61. L'arbre 63 entraîne l'essieu arrière 4 et par là les roues 4A, et l'arbre 62 entraîne l'essieu avant 3 et par là les roues 3A. Le réducteur 61 peut avoir un ou plusieurs rapports de réduction. Il est à noter que les arbres 62 et 63 s'étendent selon la direction longitudinale A-A de la machine 1 et donc parallèlement aux longerons 10-1, 10-2. Toutefois, de très nombreux autres types de transmission de puissance vers l'essieu avant 3 et l'essieu arrière 4 sont possibles. Notamment, il peut y avoir un moteur électrique pour l'essieu avant 3 et un autre moteur électrique pour l'essieu arrière 4. Il est également possible de prévoir que le moteur électrique 60 entraîne une pompe hydraulique qui entraîne à son tour un moteur hydraulique pour l'essieu avant 3 et un autre moteur hydraulique pour l'essieu arrière 4.

Le moteur électrique d'actionnement 70 assure quant à lui l'actionnement du bras de levage 20. Selon un exemple, le moteur électrique 70 entraîne une pompe hydraulique, laquelle alimente des actionneurs hydrauliques, par exemple des vérins hydrauliques, pour actionner les mouvements du bras de levage 20. Les mouvements comportent par exemple les mouvements de montée-descente effectués par un vérin de levage situé sous le bras de levage 20, les mouvements d'extension-rétraction effectués par un vérin de télescopage situé dans le bras de levage 20, et les mouvements du porte-outil. Un tel actionnement hydraulique du bras de levage 20 est bien connu en tant que tel et n'est donc pas décrit en détail ici.

Comme représenté sur la figure 4, le boîtier de distribution de puissance 50 peut comporter un ou plusieurs chargeurs 53 permettant de recharger les première et deuxième unités de stockage d'énergie électrique 40A-40B.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Machine de manutention (1) comportant :
- un châssis (2) ;
- un bras de levage (20) qui est monté pivotant sur le châssis (2) dans un plan longitudinal médian ;
- un essieu avant (3) et un essieu arrière (4) qui sont fixés au châssis (2) ;
- une cabine (6) destinée à accueillir un conducteur qui est fixée au châssis (2) et est positionnée entre l'essieu avant (3) et l'essieu arrière (4) et d'un premier côté du bras de levage (20) ;
- au moins un moteur électrique (60, 70) ; et
- une première et une deuxième unités de stockage d'énergie électrique (40A, 40B) qui sont connectées à l'au moins un moteur électrique (60, 70) et fixées au châssis (2) de part et d'autre du bras de levage (20), la première unité de stockage d'énergie électrique (40A) étant positionnée derrière la cabine (6) du premier côté du bras de levage (20) et la deuxième unité de stockage d'énergie électrique (40B) étant disposée d'un deuxième côté du bras de levage (20), opposé au premier côté, au moins partiellement en regard de la première unité de stockage d'énergie électrique selon une direction transversale (B-B) orthogonale au plan longitudinal médian.

2. Machine de manutention (1) selon la revendication 1, dans laquelle les première et deuxième unités de stockage d'énergie électrique (40A, 40B) présentent une distribution de masse sensiblement équilibrée par rapport au plan longitudinal médian.

3. Machine de manutention (1) selon la revendication 2, dans laquelle la distribution de masse est de 50 à 60% du côté de la première unité de stockage d'énergie électrique (40A) et de 40 à 50 % du côté de la deuxième unité de stockage d'énergie électrique (40B).

4. Machine de manutention (1) selon l'une des revendications 1 à 3, dans laquelle les première et deuxième unités de stockage d'énergie électrique (40A, 40B) comportent chacune plusieurs cellules électrolytiques, la première unité de stockage d'énergie électrique (40A) ou la deuxième unité de stockage d'énergie électrique (40B) comportant un système de gestion de batterie configuré pour surveiller et gérer les cellules électrolytiques des première et deuxième unités de stockage d'énergie électrique (40A, 40B).

5. Machine de manutention (1) selon la revendication 4, dans laquelle le système de gestion de batterie est compris dans la première unité de stockage d'énergie électrique (40A), le nombre de cellules électrolytiques de la deuxième unité de stockage d'énergie électrique (40B) étant supérieur au nombre de cellules électrolytiques de la première unité de stockage d'énergie électrique (40A).

6. Machine de manutention (1) selon l'une des revendications 1 à 3, dans laquelle la première unité de stockage d'énergie électrique (40A) comporte plusieurs cellules électrolytiques, et la deuxième unité de stockage d'énergie électrique (40B) comporte un système de gestion de batterie configuré pour surveiller et gérer les cellules électrolytiques de la première unité de stockage d'énergie électrique (40A).

7. Machine de manutention (1) selon l'une des revendications 1 à 6, dans laquelle les première et deuxième unités de stockage d'énergie électrique (40A, 40B) comportent chacune au moins un capteur de température et au moins un dispositif de mesure de l'état de charge.

8. Machine de manutention (1) selon l'une des revendications 1 à 7, dans laquelle la première unité de stockage d'énergie électrique (40A) est située dans une direction longitudinale (A-A), parallèle au plan longitudinale médian, entre la cabine (6) et une extrémité arrière (11) du châssis (2) et est située dans la direction transversale (B-B) entre le bras de levage (20) et un bord latéral du châssis (2).

9. Machine de manutention (1) selon l'une des revendications 1 à 8, dans laquelle la machine de manutention (1) comporte un caisson (5) configuré pour recevoir une pluralité d'équipements, le caisson (5) étant positionné entre l'essieu avant (3) et l'essieu arrière (4) et du deuxième côté du bras de levage (20), la deuxième unité de stockage d'énergie électrique (40B) étant située dans une direction longitudinale (A-A), parallèle au plan longitudinale médian, entre le caisson (5) et une extrémité arrière (11) du châssis (2) et étant située dans la direction transversale (B-B) entre le bras de levage (20) et un bord latéral du châssis (2).

10. Machine de manutention (1) selon l'une des revendications 1 à 9, dans laquelle le moteur électrique est un moteur électrique de propulsion (60) configuré pour propulser la machine de manutention (1), et la machine de manutention (1) comporte un moteur électrique d'actionnement (70) configuré pour actionner le bras de levage (20), les première et deuxième unités de stockage d'énergie électrique (40A, 40B) étant connectés aux moteurs électriques d'actionnement (70) et de propulsion (60).

11. Machine de manutention (1) selon la revendication 10, dans laquelle la machine de manutention (1) comporte un caisson (5) configuré pour recevoir une pluralité d'équipements, le caisson (5) étant positionné entre l'essieu avant (3) et l'essieu arrière (4) et du deuxième côté du bras de levage (20), le moteur électrique de propulsion (60) étant situé entre l'essieu avant (3) et l'essieu arrière (4) sous le bras de levage (20), et le moteur électrique d'actionnement (70) étant situé dans le caisson (5).

12. Machine de manutention (1) selon l'une des revendications 1 à 11, dans laquelle l'au moins un moteur électrique (60, 70) est accouplé à au moins un des essieux avant (3) et arrière (4).
